Europäisches Patentamt

European Patent Office

Office européen des brevets

(11) Veröffentlichungsnummer: **0 498 005 A1**

# EUROPÄISCHE PATENTANMELDUNG

(21) Anmeldenummer: **91101569.1**

(51) Int. Cl.5: **C09K 3/18**, C03C 17/32

(22) Anmeldetag: **06.02.91**

(43) Veröffentlichungstag der Anmeldung:
**12.08.92 Patentblatt 92/33**

(84) Benannte Vertragsstaaten:
**AT BE CH DE DK ES FR GB GR IT LI LU NL SE**

(71) Anmelder: **Melitta Haushaltsprodukte GmbH & Co. Kommanditgesellschaft**
**Ringstrasse 99**
**W-4950 Minden 1(DE)**

(72) Erfinder: **Gross-Lannert, Renate, Dr.**
**Talstrasse 11**
**W-6057 Dietzenbach(DE)**
Erfinder: **Sinsel, Friedel, Dr. Ing.**
**Severusstrasse 49**
**W-6000 Frankturt/Main 50(DE)**
Erfinder: **Jäger, Erika**
**Am Feldtor 2**
**W-6220 Rüdesheim(DE)**

(74) Vertreter: **Gudel, Diether, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Grosse Eschenheimer Strasse 39**
**W-6000 Frankturt am Main 1(DE)**

(54) **Antibeschlagmittel.**

(57) Beschrieben wird ein hydrophiles Antibeschlagmittel auf der Basis eines hygroskopischen, polymeren Filmbildners, eines Tensids und eines geeigneten Lösungsmittels. Es werden Rezepturen für ein derartiges Antibeschlagmittel angegeben, die allen in der Praxis an ein solches Mittel gestellten Anforderungen genügen. Insbesondere zeichnet sich das Mittel durch sehr gute filmbildende Eigenschaften mit hoher Transparenz auf Silikatgläsern und Kunststoffgläsern aus, es hat eine effektive Wirkung, nachgewiesen anhand von Streulichtmessungen und seine Wirkung bleibt über Wochen erhalten.

EP 0 498 005 A1

Die Erfindung betrifft ein hydrophiles Antibeschlagmittel auf der Basis eines hygroskopischen, polymeren Filmbildners, eines Tensids und eines geeigneten Lösungsmittels.

Hydrophile Antibeschlagmittel mit dieser Grundzusammensetzung sind gebräuchlich. Vgl. Römpp, Chemie Lexikon, Stichwort "Beschlagverhinderungsmittel".

Das Beschlagen von optischen Geräten und insbesondere von Brillengläsern ist eine unangenehme, störende Erscheinung und für den Anwender bzw. Brillenträger von erheblichem Nachteil. Ursache des Beschlagens ist die aufgrund einer Temperaturänderung eintretende Kondensation von Wasserdampf auf den Gläsern.

Grundsätzlich bestehen zwei Möglichkeiten, dieser Erscheinung entgegenzuwirken: einerseits kann durch geeignete Hilfsmittel die Glasoberfläche wasserabweisend eingestellt werden, d.h. hydrophobiert werden, andererseits ist es möglich, das Glas durch Hilfsmittel mit polaren Gruppen hydrophiler zu machen, so daß sich der kondensierende Wasserdampf nicht als mikroskopisch kleine Tröpfchen, sondern als dünner durchsichtiger Film abscheidet.

Hilfsmittel dieser Art, sogenannte Antibeschlagmittel, sind hinreichend bekannt. Viele dieser hydrophilen oder hydrophoben Mittel sind jedoch für die spezielle Anwendung als Antibeschlagmittel für optische Geräte und Brillengläser nicht geeignet. Beispielsweise werden Mittel beschrieben, die als hypdrophile Komponente Glycerin und als waschaktive Verbindung Schmierseife enthalten (DDR-PS 88 153). Eine vergleichbare Zusammensetzung beschreibt die Deutsche Offenlegungsschrift 21 22 187: Wasser, oberflächenaktive Substanz und Gefrierschutzmittel (z.B. Glykol). Es hat sich jedoch gezeigt, daß solche Mittel ungeeignet sind, weil sie starke Verunreinigungen auf den Gläsern zurücklassen.

Weiterhin sind Mittel bekannt, die eine Hydrophobierung der Glasoberflächen herbeiführen sollen. So beschreiben die Deutsche Offenlegungsschrift 25 19 187, die Deutsche Auslegeschrift 12 14 364 und die DD-Patentschrift 254 742 derartige Mittel. Aber auch in diesen Fällen hat sich die Nichtverwendbarkeit aufgrund enormer Sichtbeeinträchtigung bei Anwendung der Mittel auf Brillengläser erwiesen.

Auch die bereits auf dem Markt befindlichen Mittel können die gestellte Aufgabe nur ungenügend erfüllen. So haben sich beispielsweise bei einigen käuflichen Mitteln besonders negativ der unangenehme Geruch, die umständliche Handhabung während der Anwendung und die sichtbeeinträchtigende Streifenbildung nach der Anwendung erwiesen. Die Mittel werden überwiegend in flüssiger oder dickflüssiger Form angeboten und werden als Tropfen auf das Glas geträufelt oder mit Hilfe eines Zerstäubers aufgesprüht. Zur homogenen Verteilung der Mittel ist deshalb ein zusätzliches Tuch notwendig. Oftmals müssen die Gläser durch kräftiges Reiben nachpoliert werden, um sie klar durchsichtig zu bekommen. Der unangenehme Geruch einiger Mittel ist vermutlich auf die Verwendung höherer Alkohole (z.B. Butanole) und geruchsintensiver Inhaltsstoffe, wie beispielsweise Trikresylphosphat, zurückzuführen, so daß diese Mittel bislang auch nicht überzeugen konnten.

Aufgabe der Erfindung ist es daher, eine Formulierung mit Antibeschlagwirkung für die Anwendung auf durchsichtigen Oberflächen, insbesondere für Brillengläser aus Kunststoff und Glas, zu entwickeln, die direkt mit Hilfe z.B. eines getränkten Zellstofftuches auf die Gläser (Brillengläser) aufgebracht werden kann, keinen unangenehmen Geruch aufweist, keine Streifenbildung auf den Gläsern hinterläßt und physiologisch unbedenklich ist.

Bekanntermaßen sind Verbindungen mit hydrophilen Gruppen in der Lage, die Oberflächenspannung von Wasser zu erniedrigen. Diese Eigenschaften besitzen auch polymere, hygroskopische Filmbildner. Zusätzlich bedecken sie die Glasoberfläche mit einem dünnen Film, so daß eine länger anhaltende Wirkung erreicht wird. Als besonders geeignete Filmbildner haben sich Polymere von Vinylpyrrolidon und Copolymere aus Vinylpyrrolidon und Vinylacetat unterschiedlicher Zusammensetzung erwiesen. Die Deutschen Offenlegungsschriften 20 38 135 und 21 19 349 beschreiben bereits deren grundsätzliche Eignung.

Es wurde jedoch gefunden, daß die Wirkung der Filmbildner alleine noch nicht für eine dauerhafte Antibeschlagwirkung ausreichend ist, sondern nur in Kombination mit einem tensidischen Hilfsstoff sowohl eine streifenfreie Filmbildung als auch eine dauerhafte Antibeschlagwirkung des Filmes erreicht wird.

Erfindungsgemäß ist demnach für die Qualität, d.h. keine sichtbeeinträchtigenden Rückstände auf den Gläsern, und die Wirkung von Antibeschlagmitteln von entscheidender Bedeutung die geeignete Kombination von polymeren Filmbildnern, Tensiden und die zu deren Lösung notwendigen Lösungsmittel, meist Wasser und Alkohol, vorzugsweise Isopropanol, und deren Konzentrationsverhältnisse zueinander.

Eine Formulierung, die diese Bedingungen erfüllt und besonders gut geeignet ist, setzt sich folgendermaßen zusammen: 0,3 g Copolymer aus Vinylpyrrolidon/Vinylacetat (60/40), 0,3 g Copolymer aus Vinylpyrrolidon/Vinylacetat (20/80) in Isopropanol, 0,5 g Alkyldiglykolethersulfat-Natriumsalz (Alkyl = 75-70 % $C_{12}$, 25-30 % $C_{14}$), 0,5 g Nonylphenoloxethylat, 0,2 g Duftstoff, 15 g Isopropanol und 85 g Wasser.

Von dieser Mischung wurden 0,7 g Flüssigkeit auf ein Zellstofftuch eingewogen und gegebenenfalls, zwecks Lagerung, in üblicher Art und Weise in eine Kunststofftüte eingeschweißt. Die mit der Rezeptur behandelten Gläser wurden bei zwei Luftfeuchten auf ihre Beschlagungsdichte gemessen, nämlich bei 50 % Luftfeuchte und 19,5°C bzw. bei 76 % Luftfeuchte und 22,5°C.

Bei unbehandelten Silikatgläsern und Kunststoffgläsern ergab sich ein Streulichtanteil von 70 bis 90 % innerhalb der ersten drei Minuten nach dem Auftragen. Wurden diese Gläser mit dem erfindungsgemäßen Mittel behandelt, so lag der Streulichtanteil unter 1 %.

Bei einer Lagerung über einen Zeitraum von vier Wochen ging die Wirkung der Formulierung nicht verloren.

Vorteilhaft für diese Formulierung ist:
a) sehr gute filmbildende Eigenschaften mit hoher Transparenz auf Silikat- und Kunststoffglas,
b) effektive Wirkung ist anhand von Streulichtmessungen belegt,
c) die Wirkung bleibt über Wochen erhalten,
d) geringe Konzentration der Komponenten,
e) geringe Auftragsmenge auf das Zellstofftuch,
f) einfache Handhabung bei der Anwendung,
g) angenehmer Geruch,
h) die Formulierung kann auch einen Duftstoff enthalten, ohne ihre Stabilität und ihre Wirksamkeit zu verlieren.

Nachfolgend werden weitere ausgewählte Rezepturen aufgeführt:
A) 0,25 g Vinylpyrrolidon/Vinylacetat-Copolymer (60/40),
0,25 g Vinylpyrrolidon/Vinylacetat-Copolymer (20/80) in Isopropanol,
1,0 g Alkyldiglykolethersulfat-Natriumsalz,
1,0 g Alkylphenoloxethylat,
50 g Isopropanol und
50 g Wasser
B) 0,5 g Vinylpyrrolidon/Vinylacetat-Copolymer (60/40),
0,5 g Vinylpyrrolidon/Vinylacetat-Copolymer (20/80) in Isopropanol,
0,5 g Alkyldiglykolethersulfat-Natriumsalz,
50 g Isopropanol und
50 g Wasser
C) 0,6 g Polyvinylpyrrolidon,
0,3 g Alkyldiglykolethersulfat,
12 g Ethanol und
90 g Wasser

Versuche haben ergeben, daß die beanspruchten Rezepturen die Erfindungsaufgabe nur in den angegebenen, sehr engen Bandbreiten lösen. Darüber hinaus gehende Abweichungen in den Rezepturen verschlechtern die Wirkung des Mittels in zumindest einer ihrer für den Erfolg wichtigen Eigenschaften drastisch.

**Patentansprüche**

1.  Hydrophiles Antibeschlagmittel auf der Basis eines hygroskopischen, polymeren Filmbildners, eines Tensids und eines geeigneten Lösungsmittels,
    **dadurch gekennzeichnet,**
    daß es 0,3 g Copolymer aus Vinylpyrrolidon/Vinylacetat (60/40), 0,3 g Copolymer aus Vinylpyrrolidon/Vinylacetat (20/80) in Isopropanol, 0,5 g Alkyldiglykolethersulfat-Natriumsalz (Alkyl = 75-70 % $C_{12}$, 25-30 % $C_{14}$), 0,5 g Nonylphenoloxethylat, 15 g Isopropanol und 85 g Wasser enthält, wobei das Antibeschlagmittel die angegebenen Bestandteile etwa in den folgenden Anteilen enthält:
    0,2 bis 1 Teile Filmbildner,
    0,3 bis 1,5 Teile Tensid,
    10 bis 50 Teile Alkohol und
    50 bis 100 Teile Wasser.

2.  Hydrophiles Antibeschlagmittel auf der Basis eines hygroskopischen, polymeren Filmbildners, eines Tensids und eines geeigneten Lösungsmittels,
    **dadurch gekennzeichnet,**
    daß es 0,25 g Vinylpyrrolidon/Vinylacetat-Copolymer (60/40), 0,25 g Vinylpyrrolidon/Vinylacetat-Copolymer (20/80) in Isopropanol, 1,0 g Alkyldiglykolethersulfat-Natriumsalz, 1,0 g Alkylphenoloxethylat, 50 g Isopropanol und 50 g Wasser enthält, wobei das Antibeschlagmittel die angegebenen Bestandteile etwa in den folgenden Anteilen enthält:
    0,2 bis 1 Teile Filmbildner,
    0,3 bis 1,5 Teile Tensid,
    10 bis 50 Teile Alkohol und
    50 bis 100 Teile Wasser.

3.  Hydrophiles Antibeschlagmittel auf der Basis eines hygroskopischen, polymeren Filmbildners, eines Tensids und eines geeigneten Lösungsmittels,
    **dadurch gekennzeichnet,**
    daß es 0,5 g Vinylpyrrolidon/Vinylacetat-Copolymer (60/40), 0,5 g Vinylpyrrolidon/Vinylacetat-Copolymer (20/80) in Isopropanol, 0,5 g Alkyldiglykolethersulfat-Natriumsalz, 50 g Isopropanol und 50 g Wasser enthält, wobei das Antibeschlagmittel die angegebenen Bestandteile etwa in den folgenden Anteilen enthält:
    0,2 bis 1 Teile Filmbildner,
    0,3 bis 1,5 Teile Tensid,
    10 bis 50 Teile Alkohol und
    50 bis 100 Teile Wasser.

4. Hydrophiles Antibeschlagmittel auf der Basis eines hygroskopischen, polymeren Filmbildners, eines Tensids und eines geeigneten Lösungsmittels,
   **dadurch gekennzeichnet**,
   daß es 0,6 g Polyvinylpyrrolidon, 0,3 g Alkyldiglykolethersulfat, 12 g Ethanol und 90 g Wasser enthält, wobei das Antibeschlagmittel die angegebenen Bestandteile etwa in den folgenden Anteilen enthält:
   0,2 bis 1 Teile Filmbildner,
   0,3 bis 1,5 Teile Tensid,
   10 bis 50 Teile Alkohol und
   50 bis 100 Teile Wasser.

5. Hydrophiles Antibeschlagmittel nach einem der Ansprüche 1 bis 4,
   **dadurch gekennzeichnet**,
   daß es zusätzlich einen Duftstoff enthält.

Europäisches
Patentamt

**EUROPÄISCHER RECHERCHENBERICHT**

Nummer der Anmeldung

EP    91 10 1569

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2 038 135 (PACA GMBH)<br>* das ganze Dokument *<br>--- | 1-4 | C09K3/18<br>C03C17/32 |
| D,A | DE-A-2 119 349 (DURSOL-FABRIK OTTO DURST)<br>* Seite 2, Absatz 3 - Seite 3, Absatz 2 *<br>--- | 1-4 | |
| A | US-A-4 467 073 (CREASY)<br>* Spalte 1, Zeile 34 - Spalte 3, Zeile 16 *<br>--- | 1-4 | |
| A | PATENT ABSTRACTS OF JAPAN<br>vol. 13, no. 417 (C-636)(3765) 14. September 1989<br>& JP-A-01 156 390 (OJI KAKO K.K. ) 19. Juni 1989<br>* das ganze Dokument *<br>--- | 1-4 | |
| A | PATENT ABSTRACTS OF JAPAN<br>vol. 13, no. 190 (C-593)(3538) 8. Mai 1989<br>& JP-A-01 016 889 (HITACHI CHEM CO ) 20. Januar 1989<br>* das ganze Dokument *<br>----- | 1-4 | |
| | | | **RECHERCHIERTE SACHGEBIETE (Int. Cl.5)**<br><br>C09K<br>C03C |

Der vorliegende Recherchenbericht wurde für alle Patentansprüche erstellt

| Recherchenort | Abschlußdatum der Recherche | Prüfer |
|---|---|---|
| DEN HAAG | 16 SEPTEMBER 1991 | VAN BOMMEL L. |